(19) Europäisches Patentamt
European Patent Office
Office européen des brevets

(11) **EP 3 200 006 B1**

(12) **EUROPEAN PATENT SPECIFICATION**

(45) Date of publication and mention of the grant of the patent:
**26.08.2020 Bulletin 2020/35**

(21) Application number: **15844826.6**

(22) Date of filing: **18.09.2015**

(51) Int Cl.:
*G02B 27/09* (2006.01)     *G02B 27/01* (2006.01)
*B60K 35/00* (2006.01)

(86) International application number:
**PCT/JP2015/076751**

(87) International publication number:
**WO 2016/047621 (31.03.2016 Gazette 2016/13)**

(54) **HEAD-UP DISPLAY DEVICE**

BLICKFELDANZEIGEVORRICHTUNG

DISPOSITIF D'AFFICHAGE TÊTE HAUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2014 JP 2014193281**
**24.09.2014 JP 2014193282**

(43) Date of publication of application:
**02.08.2017 Bulletin 2017/31**

(73) Proprietor: **Nippon Seiki Co., Ltd.**
**Nagaoka-shi, Niigata 940-8580 (JP)**

(72) Inventors:
• **MATSUURA, Kazuya**
**Nigata (JP)**
• **KAWAI, Takeru**
**Nigata (JP)**
• **HARUYAMA, Hiroteru**
**Nigata (JP)**

(74) Representative: **Carpmaels & Ransford LLP**
**One Southampton Row**
**London WC1B 5HA (GB)**

(56) References cited:
**EP-A1- 0 631 167        EP-A1- 2 690 484**
**JP-A- 2007 108 429     JP-A- 2010 152 005**
**JP-A- 2011 085 700     JP-A- 2012 203 176**
**KR-A- 20140 008 425    US-A- 5 748 377**
**US-A1- 2009 296 049**

## Description

### TECHNICAL FIELD

The present invention relates to a head-up display device.

### BACKGROUND ART

As a display for displaying a predetermined image, a unit that is configured to transilluminate a liquid crystal display element with backlight has been known. Patent Literature 1 discloses a display unit called a head-up display (HUD), which is provided with a display having such a configuration. A HUD device allows a user (mainly, a driver) to visually recognize a predetermined image as a display image (virtual image) by projecting display light from a display to a windshield of a vehicle.

In the display according to Patent Literature 1, a condensing illumination optical system is used as backlight. A backlight unit is configured behind a liquid crystal display element by arranging a condenser lens (parallel light generation means), a lens array and a field lens (also called a focusing lens, a condensing means) on an optical path from a light source for backlight to a liquid crystal display element. In the HUD device according to Patent Literature 1, light beams emitted from multiple images of a light source generated by the lens array are refracted by the field lens, and incident on the liquid crystal display element at a predetermined angle. A main light beam incident on the liquid crystal display element is emitted from the liquid crystal display element as display light at an angle almost equal to an incident angle, and condensed in the vicinity of a view point area of a user (eye box) via a projection optical system that is mainly configured with a concave mirror and a front glass.

EP2690484 describes an illumination optical system of a head-up display device having a light source for emitting a light beam, a lens array for generating a plurality of images of the light source by dividing the light beam, and a field lens for irradiating on a display member at a given angle the light beam emitted from the image of the light source, which is generated by the lens array. The head-up display device also includes a liquid crystal display and a concave mirror, arranged to cause the display light emitted from the liquid crystal display to be enlarged and irradiated on a windshield.

EP0631167 describes a head-up display including an image display means and a hologram as reflection means for reflecting display beams emitted from the display, wherein an image is reflected inside a windshield and the image is formed at the front of, and outside, the windshield. Concave mirrors having different focal lengths in different directions are recorded on the hologram as the reflection means so as to offset distortion of the display image resulting from the radius of curvature of the windshield. A toroidal concave mirror may be employed.

JP2011085700 describes an illumination device to prevent luminance unevenness recognized as stripes from being included in light emitted from a lens array, while using a plurality of light sources. The device may include a cylindrical lens. US2009/296049 describes a projection display device for enlarging and projecting an image on a screen.

### CITATION LIST

#### PATENT LITERATURE

Patent Literature 1: Japanese Unexamined Patent Application Publication No. 2012-203176

The HUD device according to Patent Literature 1 assumes that an image magnification ratio of the HUD device, namely a focal distance of the projection optical system equals in longitudinal and lateral directions of a display image, and a curved surface of the field lens is shaped rotationally symmetrical with respect to an optical axis. However, in a HUD device mounted in a vehicle, a focal distance of a projection optical system may be different in longitudinal and lateral directions depending on the type of a vehicle, due to design constraints such as correcting distortion of a display image occurred mainly in a front glass, housing in a limited mounting space, providing a member for preventing a stray light. In that case, convergence of the display light degrades in the viewpoint area, light use efficiency may be lowered, and luminance uniformity of the display image visible from a predetermine viewpoint may be decreased.

Further, in the HUD device according to Patent Literature 1, due to the aberration of the condensing means, as separating away from the optical axis of the light source, the irradiation range of the light beams emitted from the multiple images of the light source in the liquid crystal display element is narrowed. Thus, uneven illumination occurs in the display area of the liquid crystal display element, and uneven brightness occurs in the display image caused by movement of the viewpoint. As a countermeasure against this problem, although optimization of lens arrangement or the like in the condensing means is considerable, the optimization in a range satisfying the allowable volume of the backlight is limited. Further, if the irradiation range is expanded from a position far from the optical axis, the irradiation range is also expanded from a position near the optical axis, and the light use efficiency is lowered. In addition, the light distribution control of the liquid crystal display element 2 deviates from an ideal, and the convergence in the user's eye box may be reduced.

## SUMMARY OF THE INVENTION

## PROBLEMS TO BE SOLVED BY THE INVENTION

The present invention has been made in view of the above circumstances. Accordingly, it is an object to provide a HUD device capable of suppressing uneven illumination in a display area of a display element due to an aberration of a condensing means.

## MEANS FOR SOLVING THE PROBLEMS

Head-up display device according to the present invention, which projects a display light emitted from a display including a backlight unit and a display to a viewpoint area of a viewer via a projection means, and visually recognizes an image represented by the display light, comprising: a light source which emits light to illuminate the display element; a lens array which divides light emitted from the light source, and generates a plurality of images of the light source, and a condensing means which condenses light emitted from an image of the light source to correspond to a display area of the display element, wherein the condensing means is configured such that a focal distance is different in longitudinal and lateral directions to correct a different focal distance of the projection means in longitudinal and lateral directions.

In order to achieve the above object, the head-up display device according to the present invention further comprises a plurality of lenses arranged in the lens array, and the lens array is configured such that a light distribution angle of a lens in a periphery different from a light distribution angle of a lens at a center.

## EFFECT OF THE INVENTION

According to the present invention, it is possible to control uneven illumination in a display area of a display element due to an aberration of a condensing means.

## BRIEF DESCRIPTION OF THE DRAWINGS

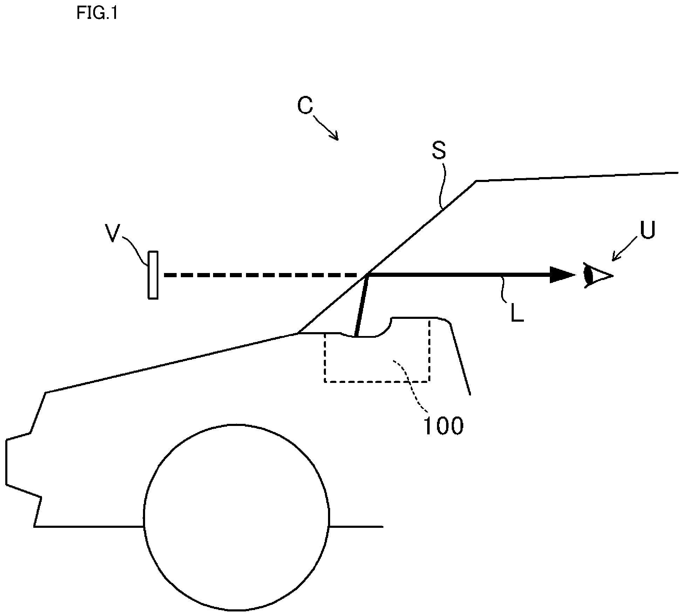

Fig. 1 is a schematic diagram for explaining a mounting mode of a HUD device according to an embodiment of the present invention.
Fig.2 is a schematic cross-sectional view of a HUD device according to an embodiment of the present invention.
Fig.3 is an enlarged view in the vicinity of a display of the HUD device shown in Fig.2.
Fig.4 is a schematic exploded perspective view of a backlight unit according to an embodiment of the present invention.
Fig.5 is a schematic diagram for explaining the function of the backlight unit according to an embodiment of the present invention, (a) a cross-sectional view of the embodiment and comparative example, (b) a longitudinal sectional view of a comparative example, (c) a longitudinal sectional view of the embodiment.
Fig.6 is a front view showing a lens array according to an embodiment of the present invention.
Fig.7 is a diagram showing a second focusing lens according to an embodiment of the present invention.
Fig.8 is a cross-sectional view of a schematic view for explaining the function of a backlight unit according to the related art.
Fig.9 is a cross-sectional view showing a lens array according to an embodiment of the present invention.
Fig 10 is a cross-sectional view illustrating another example of a lens array according to an embodiment of the present invention

## MODE FOR CARRYING OUT THE INVENTION

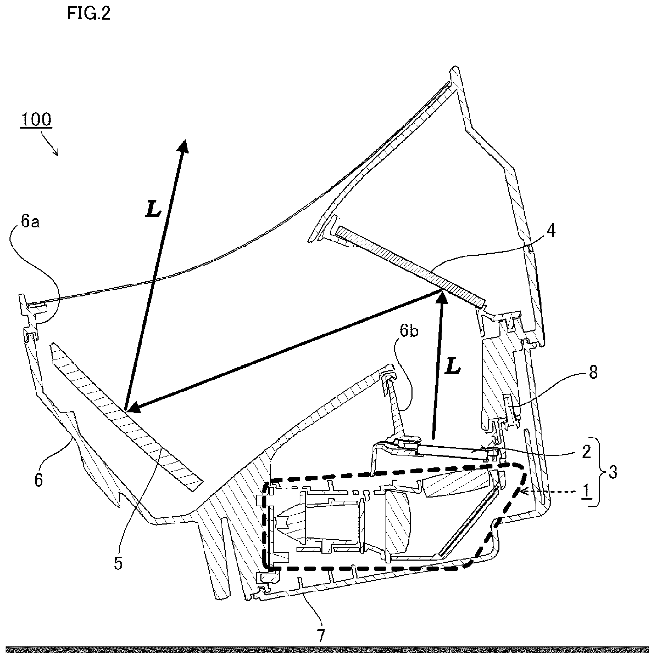

A head-up display (HUD) device according to an embodiment of the present invention will be described with reference to the drawings.
A HUD device 100 according to this embodiment is, as shown in Fig 2, provided to be embedded in a dashboard of a vehicle C. The HUD device 100, as shown in Fig.2, comprises a display 3 composed of a backlight unit 1 and a liquid crystal display element 2 (display element), a plane mirror 4, a concave mirror 5, a housing 6, and a protection member 7.
The HUD device 100 projects a display light L emitted from the display 3 to a windshield S (front glass) of a vehicle C, and permits a user U (mainly, a driver) to visually recognize an image represented by the display light L as a virtual image V (display image). The display light L emitted from the display 3 is obtained by transilluminating the liquid crystal display element 2 with light from the backlight unit 1, and represents a predetermined image.

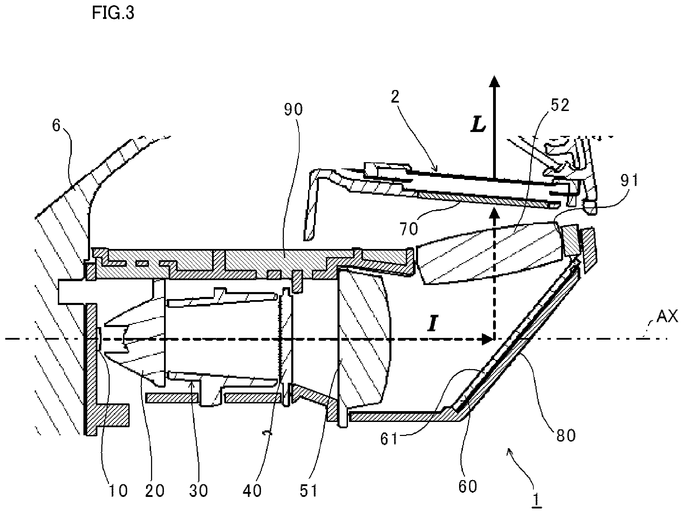

The backlight unit 1, as shown in Fig.3, comprises a light source 10, a parallel light generation means 20, an illuminance uniformizing means 30, a lens array 40, a first focusing lens 51, a second focusing lens 52, a reflection part 60, a diffusion plate 70, a case body 80, and a cover member 90.

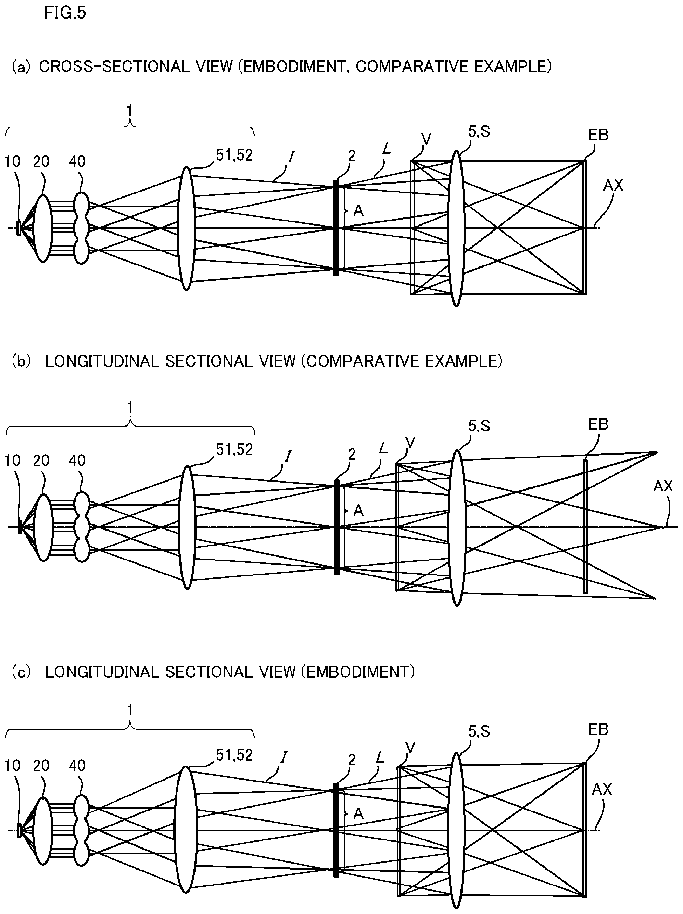

The parallel light generation means 20, the illumination uniformizing unit 30, the lens array 40, the first focusing lens 51, the second focusing lens 52, the reflection part 60 and the diffusion plate 70 are arranged on an optical path of light emitted from the source 10. They are arranged from the light source 10 to the liquid crystal display element 2, in the order of the parallel light generation means 20, the illumination uniformizing unit 30, the lens array 40, the first focusing lens 51, the reflection part 60, the second focusing lens 52 and the diffusion plate 70. The light source 10, the parallel light generation means 20, the lens array 40, the first focusing lens 51 and the second focusing lens 52 constitute an illumination optical system of the HUD device 100. The backlight unit 1 controls an angle of display light L emitted from a front surface of the liquid crystal display element 2 (surface facing upward in Figs.2 and 3) to guide the display light L passing through the liquid crystal display element 2 to an eye box EB (viewpoint area) of a user U via a projection means (projection optical system) of the HUD device 100, composed of the concave mirror 5 and the windshield S, while uniformly irradiating the light emitted from the light source 10 to a display area A of the liquid crystal display element 2 (see Fig.5).

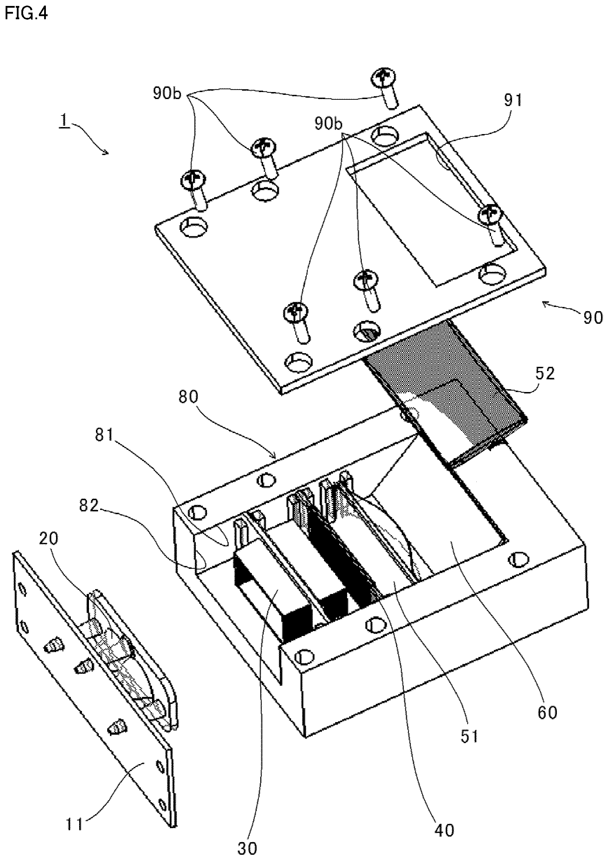

The light source 10 emits light that transilluminates the liquid crystal display element 2 (hereinafter, also called illumination light I). The light source 10 comprises two LEDs (Light Emitting Diode), for example. The light source 10 may comprise one, three or more LEDs. The light source 10 is mounted on a circuit board 11 fixed to the case body 80 (see Fig.4). The circuit board 11 is formed by providing a circuit pattern on a substrate made of aluminum, resin or the like, and electrically connected a control unit to be described later (not shown) in a known manner. The light source 10 is thermally connected to a heat radiation member (not shown). The heat radiation member is, for example, a fin-shaped structure made of metal material such as aluminum, and radiates the heat generated by the heat source 10 to the outside.

The parallel light generation means 20 receives the illumination light I from the light source 10, and outputs it as a parallel light. The parallel light mentioned here is light advancing substantially parallel to (including parallel to) an optical axis AX of the light source 10 (see Fig.3). The parallel light generation means 20 comprises a condenser lens, for example. A condenser lens is a convex lens made of engineering resin material, and one lens corresponds to one light source 10. When using a plurality of light sources 10, it takes a form of a set lens with two or more convex lenses arranged. The parallel light generation means 20 may comprise two or more lenses depending on use: reducing a curved lens surface vertex distance (lens thickness) to a predetermined thickness or lower for manufacturing convenience, or increasing parallelism of the light emitted from the parallel light generation means 20, while maintaining or increasing the intake amount of the illumination light I. Further, as the parallel light generation means 20 is arranged in the vicinity of the light source 10, it is preferable to use optical resin material with excellent heat resistance considering the influence of the heat generated by the light source 10. Furthermore, as the parallel light generation means 20, other known optical element such as a collimating lens may be used.

The illumination uniformizing means 30 receives the illumination light I collimated by the parallel light generation means 20, and uniformilizes illumination distribution of light on the exit side. The illumination uniformizing means 30 comprises a light box, for example. The light box is a square tube-shaped member surrounding the optical axis AX, and has a mirror surface inside (surface on the optical axis AX side). The illumination uniformizing means 30 may be other known light box provided with a light diffusion plate, a light reflection plate, or the like.

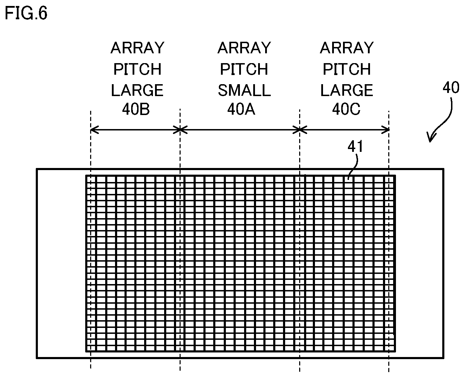

The lens array 40 is, as shown in the front view of Fig.6 (showing a liquid crystal display element 2 side), a lens assembly formed by arranging a plurality of micro lens 41 vertically and horizontally, and is a so-called fly-eye lens. The lens 41 is, for example, a so-called biconvex lens, in which both sides of the light source 10 and the liquid crystal display element 2 are the same convex shape. The optical axis of each lens 41 is parallel to the optical axis of the parallel light generation means 20. Incidentally, the curved surface of the lens 41 may be aspherical or a free curved surface.

The lens array 40 receives the illumination light I, which is substantially collimated by the parallel light generation means 20, and the illuminance is substantially uniformized by the illumination uniformizing means 30. Since the lens array generates multiple images (intermediate image) by the same number as the lens 41 constituting itself, a magnified image (the illumination light I emitted from the light source 10) of one light source 10 generated by the parallel light generation means 20 is divided by the same number as the lens 41 of the lens array 40, and becomes multiple images. This enables an even less number of light source 10 to illuminate the liquid crystal display element 2 in homogeneous light intensity distribution.

An area where the lens 41 of the lens array 40 is arranged is shaped rectangular in accordance with the display area A of the liquid crystal display element 2. When the area is divided into three regions: a central portion 40A located at the center with respect to the longitudinal direction of the rectangular shape (lateral direction in Fig.6), a left peripheral portion 40B located on the left side of the central portion 40A, and a right peripheral portion 40C located on the right side of the central portion 40A, each lens 41 is formed such that a pitch array of the lens 41 in the left and right peripheral portions 40B and 40C (a vertex distance of two adjacent lenses 41) is different from an array pitch of the lens 41 in the central portion 40A. In particular, each lens 41 is formed such that the array pitch of the lens 41 in the left and right peripheral portions 40B and 40C is larger than the array pitch of the lens 41 in the central portion 40A. An effect of making the array pitch of the lens 41 different in the periphery and at the center will be described in detail later.

The first focusing lens 51 and the second focusing lens 52 comprise a convex lens made from an optical resin material, for example, and function as a condensing means, which condenses the illumination light I emitted from the multiple images of the light source 10 generated by the lens array 40 to correspond to the display area A of the liquid crystal display element 2 (see Fig.5). Specifically, the first focusing lens 51 and the second focusing lens 52 cooperate to irradiate the illumination light I from the lens array 40 over the entire rear surface corresponding to a displayable range (display area A) of an image displayed on the front surface of the liquid crystal display element 2. This enables to efficiently irradiate the illumination light I representing the multiple images generated by the lens array 40 to a necessary rear surface of the liquid crystal display element 2. Further, at this time, by optimizing the focal distance and optical layout of the first and second focusing lenses 51 and 52 with respect to the multiple images, it is possible to approximate an angle of the illumination light I irradiated to the rear surface of the liquid crystal display element 2 to a predetermined value. This makes it possible to control a light distribution angle of the display light L emitted from the front surface of the liquid crystal display element 2, and improve the illumination efficiency of the display light L to the eye box EB.

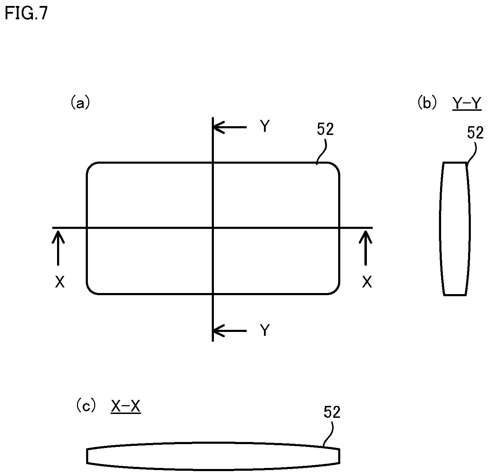

The condensing means comprising the first and second focusing lenses 51 and 52 is configured to have a different focal distance in longitudinal and lateral directions to correct a different focal distance in longitudinal and horizontal directions of the projection means comprising the concave mirror 5 and the windshield S. Specifically, at least one of the first focusing lens 51 and the second focusing lens 52 is configured as a toroidal lens. In other words, among the four surfaces of both surfaces of the first focusing lens 51 and the second focusing lens 52, at least one surface is configured as a toroidal surface that is an aspheric surface of different curvature in the longitudinal and lateral directions perpendicular to each other. In this embodiment, as shown in Fig.7, both surfaces of the second focusing lens 52 are configured as a toroidal surface to make a focal distance different in the longitudinal (vertical) and lateral (horizontal) directions. Incidentally, the Fig.7 (a) is a front view of the second focusing lens 52 (showing the liquid crystal display element 2 side). Fig.7 (b) is a longitudinal sectional view of the second focusing lens 52. Fig.7 (c) is a cross-sectional view of the second focusing lens 52. An effect of making the focal distance of the condensing means different in the vertical direction and horizontal directions will be described in detail later. As a method of making the focal distance of the condensing means different in the vertical and horizontal directions, at least one curved surface of the optical members constituting the condensing means may be a free curved surface.

The reflection part 60 is disposed between the first focusing lens 51 and the second focusing lens 52. The reflection part 60 comprises a plane mirror that is made by forming a reflection surface 61 by depositing a metal such as aluminum on a base material made of resin, glass or the like. The reflection part 60 is arranged such that the reflection surface 61 is inclined with respect to the optical axis AX of the light source 10. The illumination light I from the first focusing lens 51 reflects on the reflection surface 61, and enters the second focusing lens 52.

In this embodiment, as shown in Fig.3, the reflection part 60 is arranged such that the optical path of the illumination light I emitted from the reflection part 60 to the liquid crystal display element 2 becomes substantially perpendicular to the optical axis AX of the light source 10. In this manner, the reflection part 60 changes the optical path of the illumination light I.

The diffusion plate 70, for example, is made of synthetic resin material roughened on at least one side, and is translucent. The illumination light I from the second focusing lens 52 is diffused by passing through the diffusion plate 70, and reaches the back of the liquid crystal display element 2. Being provided with the diffusion plate 70 as described above, uneven illumination of the liquid crystal display element 2 can be reduced.

The case body 80 is formed in a box shape from resin or the like, and contains the light source 10, the parallel light generation means 20, the illumination uniformizing unit 30, the lens array 40, the first focusing lens 51, and the reflection part 60. The case body 80, as shown in Fig.4, has an upper opening 81 and a side opening 82. The upper opening 81 is opened to the liquid crystal display element 2. The side opening 82 is opened to the light source 10. The upper opening 81 and side opening 82 are communicated. A circuit board 11 is provided to close the side opening 82. The circuit board 11 is fixed to the case body 80 by a fixing means such as a screw (not shown). Thus, the light source 10 is arranged to emit light to the inside of the case body 80. The second focusing lens 52 is provided to cover the end of the upper opening 81 opposite to the light source 10. The cover member 90 is provided to close the upper opening 81.

The cover member 90, as shown in Fig.4, is formed in a plate shape from resin or the like, and covers the upper opening 81 of the case body 80. The cover member 90 is fixed to the case body 80 by a fixing means such as a screw 90b. The cover member 90 is provided with an opening 91 for viewing the second focusing lens 52. The opening 91 has a shape corresponding to the lens surface shape of the second focusing lens 52.

The case body 80 and the cover member 90 constitute a housing of the backlight unit 1.

As described above, one case body 80 contains optical parts such as the illumination uniformizing means 30, the first focusing lens 51, and the reflection part 60. This facilitates assembling of the backlight unit 1. Further, as the cover member 90 covers the parts other than the necessary (other than the opening 91 for viewing the second focusing lens 52), the illumination light I is prevented from leaking to the outside of the backlight unit 1.

The liquid crystal display element 2 is formed by providing a polarizing panel of TFT (Thin Film Transistor) type, for example. Aliquid crystal panel constituting the liquid crystal display element 2 may be of a passive drive type. Further, a liquid crystal panel is available in various types, such as, TN (Twisted Nematic) type, VA (Vertical Alignment) type, STN (Super Twisted Nematic) type, and a ferroelectric type.

The liquid crystal display element 2 displays a predetermined image in the display area A by switching each pixel constituting the display area A to one of two states, transmissive and non-transmissive, under the control of the control unit (not shown). The display area A has a laterally elongated rectangular shape. For example, the control unit obtains various vehicle information transmitted from an ECU (Electronic Control Unit) of the vehicle C to a communication line, and displays an image indicating a vehicle speed, fuel consumption and the likes in the liquid crystal display element 2. At the same time, the control unit causes the light source 10 to emit light. Thus, the liquid crystal display element 2 is transilluminated by the illumination light I generated by the backlight unit 1, and the display light L representing the display image is emitted from the liquid crystal display element 2.

As described above, the display light L is emitted from the display 3 composed of the backlight unit 1 and the liquid crystal display element 2.

Returning to Fig.2, the plane mirror 4 is made by forming a reflection surface by depositing a metal such as aluminum on a base material made of resin, glass or the like. The plane mirror 4 reflects the display light L emitted from the display 3 to the concave mirror 5.

The concave mirror 5 is made by forming a reflection surface by depositing a metal such as aluminum on a base material made of resin, glass or the like. The reflection surface of the concave mirror 5 is made concave. The display light L from the display 3 is magnified by the concave mirror 5, incident on the windshield S, reflected by the windshield S, and projected to the eye box EB of the user U. Thus, the virtual image V to be viewed by the user U becomes the size that the image displayed on the display 3 is magnified.

In this way, the virtual image V is visually recognized by projecting the display light L emitted from the display 3 to the eye box EB of the user U via the projection means composed of the concave mirror 5 and the windshield S.

The housing 6 is formed in a box shape from resin or the like, and contains the plane mirror 4 and the concave mirror 5. The plane mirror 4 and the concave mirror 5 are fixed in the housing 6 by a known method.

The housing 6, as shown in Fig.2, has an upper opening 6a and a lower opening 6b. The upper opening 6a is opened to the windshield S, and functions as an exit port to pass the display light L to the outside of the HUD device 100. The lower opening 6b is located on the opposite side of the upper opening 6a, and provided with the liquid crystal display element 2 in the lower end (lower end in Fig.2). In this way, the lower opening 6b is formed such that the display surface of the liquid crystal display element 2 is viewed toward the inside of the housing 6.

As described above, the housing 6 is formed to surround the optical path of the display light L from the liquid crystal display element 2 to the upper opening 6a functioning as an exit port.

As shown in Fig.2, the backlight unit 1 is attached to the housing 6 from the lower opening 6b that is the outside of the housing 6. For example, by fixing the case body 80 to the housing 6 by a fixing means such as a screw 8, the backlight unit 1 is attached to the housing 6. In this case, the backlight unit 1 is attached such that the opening 91 of the cover member 90 covering the case body 80 (see Fig.4) communicates with the lower opening 6b of the housing 6 (see Fig.2).

The protection member is made of resin or the like, and fixed to the housing 6 by a predetermined method to cover the backlight unit 1 attached to the housing 6 from the lower side (lower side in Fig.2). The protection member 7 provided in this manner protects the backlight unit 1 from dust, vibration and the likes.

A mechanism that the HUD device 100 allows the user U to visibly recognize a predetermined image as a virtual image V is briefly described in the following (1) and (2).

(1) When the display 3 displays an image, the display light L is emitted. The display light L from the display 3 reflects on the plane mirror 4 and the concave mirror 5, and advances to the windshield S. In this way, the HUD device 100 emits the display light L to the windshield S.

(2) When the display light L from the HUD device 100 reflects on the windshield S, the virtual image V of a display image is formed in front of the windshield S viewed from the user U.

Next, referring to Fig.5, a description will be given on an effect of configuring the condensing means (first and second focusing lenses 51 and 52) to have a different focal distance in the longitudinal and lateral directions to correct the different focal distance of the projection means (concave mirror 5 and windshield S) in the longitudinal and lateral directions. Hereinafter, a description will be given on a comparative example, in which the focal distance of the projection means is equal in the longitudinal and lateral directions, that is, all curved surfaces of the first and second focusing lenses 51 and 52 constituting the condensing means are rotationally symmetric around an axis. Fig.5 (a) is a cross-sectional view of a schematic view for explaining the function of the backlight unit 1 (illumination optical system) in this embodiment and the comparative example. Fig.5 (b) is a longitudinal sectional view of a schematic view for explaining the function of the light unit 1 in the comparative example. Fig.5 (c) is a longitudinal sectional view of a schematic view for explaining the function of the backlight unit 1 in this embodiment. In Figs.5 (a) to (c), the first and second focusing lens 51 and 52 are shown by a single convex lens for clarity of the drawings, and the concave mirror 5 and the windshield S are shown by a single convex lens. Further, in order to facilitate the understanding of the function of the backlight 1, in the cross-sectional view of Fig.5 (a) and the longitudinal sectional views of Fig.5 (b), (c), regardless of the actual shape of each part, the lateral length (horizontal direction in Fig.5 (a)) and the longitudinal length (vertical direction in Fig.5 (b), (c)) are shown equal (actually, the parts except the light source 10 are elongated shape in the lateral direction).

As described above, in the HUD device 100 mounted on the vehicle C, due to various constraints on the design, the focal distance of the projection means is different in the longitudinal and lateral directions in some types of vehicle. In that case, if no measures are taken, the convergence of the display light L in the eye box EB is degraded in the longitudinal direction or lateral direction. Specifically, for example, in the case of designing the focal distance of the condensing means according to the lateral direction of the projection means, as the display light L is focused at an arbitrary point on the eye box EB, the focusing degree that is the convergence of the display light L is high with respect to the lateral direction of the eye box EB as shown in Fig.5 (a). On the other hand, as shown in Fig.5 (b), since the display light L has been focused at a position out of the eye box EB with respect to the longitudinal direction of the eye box, the convergence of the display light L is degraded. When the convergence of the display light L is degraded, the display light L guided to the outside of the eye box EB is increased, and the light use efficiency is lowered. Further, luminance variations occur in the virtual image V seen from an arbitrary viewpoint, and luminance uniformity may be lowered. Fig. 5 (b) shows the case that the focal distance of the projection means in the longitudinal direction is longer than that in the lateral direction.

In contrast, in this embodiment, the focal distance of the condensing means is different in the longitudinal and lateral directions to correct the different focal distance of the projection means in the longitudinal and lateral directions. In this configuration, while the convergence is kept high as in conventional in the lateral direction of the eye box EB as shown in Fig.5 (a), the convergence of the display light L can be kept high also in the longitudinal direction of the eye box EB as shown in Fig.5 (c) by allowing the display light L to focus at an arbitrary point on the eye box EB by equalizing the focal distance of the entire HUD device 100 in the lateral and longitudinal directions by changing the focal distance of the condensing means. Fig.5 (c) shows the case that the focal distance of the second focusing lens 52 of the condensing means in the longitudinal direction is made shorter than the focal distance in the lateral direction (the curvature of the curved surface in the longitudinal direction is changed) depending on the state that the focal distance of the projection means in the longitudinal direction is longer than that in the lateral direction. Although an image magnification ratio of the virtual image V becomes different in the longitudinal and lateral directions due to the different focal distance of the projection means in the longitudinal and lateral directions, the different image magnification rate can be corrected by making a size of an image displayed in the liquid crystal display element 2 different in longitudinal and lateral directions.

Hereinafter, a specific method of designing the focal length of the condensing means will be described.

Assuming that the focal distance of the illumination optical system (the light source 10, the parallel light generation means 20, the lens array 40, the first and second focusing lenses 51 and 52) of the HUD device 100 is fa, the focal distance of the projection means (the concave mirror 5, the windshield S) of the HUD device 100 is fb, and the focal distance of the entire HUD device 100 including the illumination optical system and the projection means is f (a + b), the focal distance f (a + b) of the entire HUD device 100 can be expressed by Equation 1 below.

[Equation 1]

$$\frac{1}{f(a+b)} = \frac{1}{fa} + \frac{1}{fb} - \frac{d}{fa \times fb}$$

Where, d is the distance between the center point of the illumination optical system and the center point of the projection means.

First, define the focal distance fb of the projection means in the longitudinal and lateral directions by taking into account the position of the eye box EB, the image magnification ratio of the virtual image V, and the design constraints such as distortion of the virtual image V and the mutability. Next, calculate or obtain one of the focal distance fa of the illumination optical system in the longitudinal and lateral directions by calculation or setting arbitrary values, and calculate one of the focal distance f (a + b) of the entire HUD device 100 in the longitudinal and lateral directions based on the above equation 1. Further, calculate the other of the focal distance fa of the illumination optical system in the longitudinal and lateral directions based on the equation 1 such that the other of the focal distance f (a + b) of the entire HUD device 100 in the longitudinal and lateral directions becomes identical to the one calculated first. Further, by an illumination simulation, adjust the calculated focal distance fa of the illumination optical system in the longitudinal and lateral directions. Based on the obtained focal distance fa of the illumination optical system in the longitudinal and lateral directions, design the focal distance of the condensing means (the second focusing lens 52 in this embodiment) in the longitudinal and lateral directions. In this manner, the focal distance of the condensing means can be made different in the longitudinal and lateral directions to correct the focal distance of the projection means in the longitudinal and lateral directions.

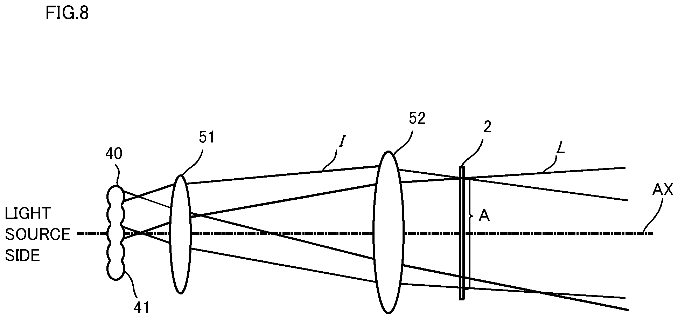

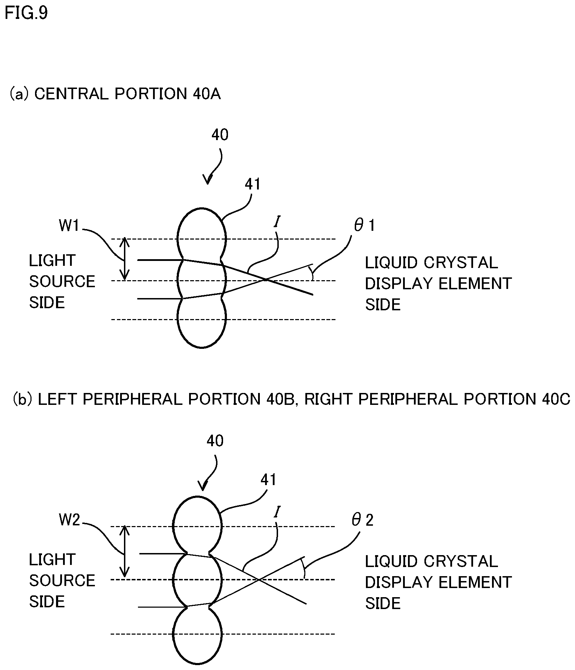

Next, an effect of making the array pitch of the lens 41 of the lens array 40 different in the central portion 40A and the left and right peripheral portions 40B and 40C will be described with reference to Figs.8 and 9. Fig.8 is a cross-sectional view of a schematic view for explaining the function of the lens array 40. Fig.9 is a cross-sectional view showing the lens 41 of the lens array 40.

As described above, the lens array 40 is a set of micro lenses 41. The illumination light I substantially collimated by the parallel light generation means 20 is incident on the lens array 40, refracted on the curved surface of the incident side (the light source 10 side) of each lens 41, and focused in the vicinity of the curved surface of the exit side (the liquid crystal display element 2 side), forming multiple images. At this time, if no measures are taken, the light distribution angle of each lens 41 is equal regardless of the position of the lens 41, and as shown in Fig.8, by the aberration of the first and second focusing lenses 51 and 52, the irradiation range of the illumination light I directed from the multiple images to the liquid crystal display element 2 is narrowed as separating away from the optical axis AX. In Fig.8, although the illumination light I emitted from the image of the light source 10 formed by the lens 41 overlapping with the optical axis AX is irradiated to the entire display area A of the liquid crystal display element 2 via the first and second focusing lenses 51 and 52, the illumination light I emitted from the image of the light source 10 formed by the lens 41 separated from the optical axis AX in the horizontal direction of the lens array 40 (vertical direction in Fig.8) is not irradiated to a part (end portion) of the display area A of the liquid crystal display element 2 even through the first and second focusing lenses 51 and 52, resulting uneven illumination. The HUD device 100 has a high directivity as the member to which the display light L is finally projected is the windshield S with a low light-diffusing property, and the uneven illumination in the liquid crystal display element 2 is likely to reflect in the luminance unevenness of the display image (virtual image V).

In contrast, in this embodiment, the array pitch of the lens 41 of the lens array 40 is made different in the central portion 40A and the left and right peripheral portions 40B and 40C of the lens array 40, and the light distribution angle of the lens 41 is different in the central portion 40A and the left and right peripheral portions 40B and 40C. In particular, each lens 41 is formed to have a larger array pitch in the left and right peripheral portions 40B and 40C than in the central portion 40A, so that the light distribution angle in the left and right peripheral portions 40B and 40C becomes larger than in the central portion 40A. As the array pitch increases, the size of the curved surface becomes larger, resulting a larger light distribution angle. Fig.9 (a) shows the lens 41 in the central portion 40A. Fig.9 (b) shows the lens 41 in the left and right peripheral portions 40B and 40C. Figs.9 (a) and (b) are both cross-sectional views. Since an array pitch W2 of the lens 41 the lens array 40 in the horizontal direction (vertical direction in Fig.9) corresponding to the length direction of the liquid crystal display element 2 in the left and right peripheral portions 40B and 40C is larger than an array pitch W1 of the lens 41 in the horizontal direction in the central portion 40A (W2 > W1), a light distribution angle θ2 in the left and right peripheral portions 40B and 40C becomes larger than a light distribution angle θ1 of the lens 41 in the central portion 40A. Therefore, even in the left and right peripheral portions, it is possible to irradiate the image of the light source 10 formed by the lens 41 to the entire display area A of the liquid crystal display element 2 by expanding the irradiation range. Further, the length of the entire lens array 40 in the longitudinal and lateral directions is defined in accordance with the light distribution angle of the display light L in front of the liquid crystal display element 2. For example, when the focal distances of the first and second focusing lenses 51 and 52 are fixed, as the length of the entire lens array 40 increases, the light distribution angle of the display light L in the liquid crystal display element 2 becomes larger.

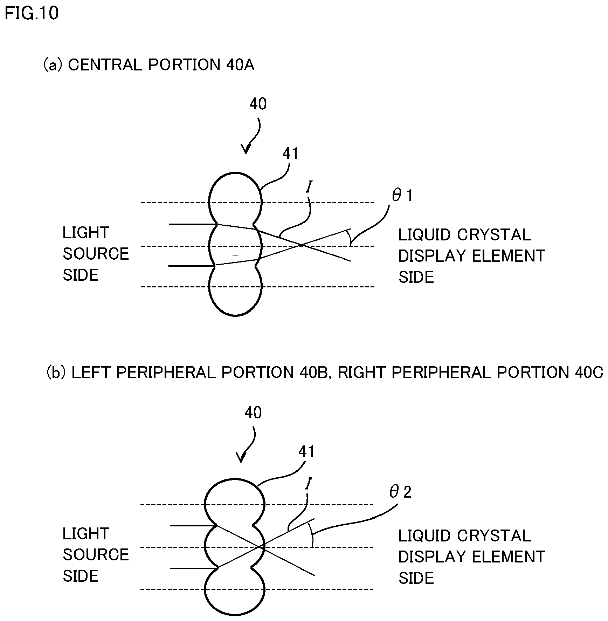

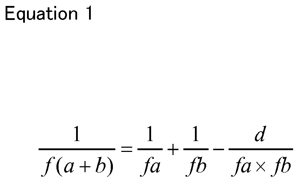

Incidentally, as a method of making the light distribution angle of the lens array 41 the lens array 40 different in the central portion 40A and the left and right peripheral portions 40B and 40C, the focal distance of the lens 41 may be made different by changing the curved surface shape and/or thickness of the lens 41 in addition to the array pitch. In this case, specifically, as shown in Fig.10, by reducing the focal distance of the lens 41 in the left and right peripheral portions 40B and 40C to shorter than the focal distance of the lens 41 in the central portion 40A, it is possible to increase the light illumination angle θ2 of the lens 41 in the eft and right peripheral portions 40B and 40C (Fig. 10 (b)) larger than the light illumination angle θ1 of the lens 41 in the central portion 40A (Fig. 10 (a)).

The HUD device 100 described above, in a first viewpoint, is a HUD device 100, which visually recognizes a virtual image V by projecting a display light L emitted from a display 3 provided with a backlight unit 1 and a liquid crystal display element 2 to a viewpoint area (eye box EB) of a viewer (a user U) via a projection means (a concave mirror 5 and a windshield S). The backlight unit 1 comprises a light source 10 for emitting light to illuminate a liquid crystal display element 2 (illumination light I), a lens array 40 which divides the light emitted from the light source 10 and forms multiple images of the light source 10, and a condensing means for condensing the light emitted from the image of the light source 10 to correspond to a display area A of the liquid crystal display element 2 (first and second focusing lenses 51 and 52). The condensing means is configured to make a focal distance different in longitudinal and lateral directions to correct the different focal distance of the projection means in longitudinal and lateral directions.

In this configuration, the display light L is focused at an arbitrary point on the eye box EB by making the focal distance of the entire HUD device 100 identical in the longitudinal and lateral directions, and the convergence of the display light L can be kept high. This makes it possible to suppress decreases in the light use efficiency and luminance uniformity of a virtual image V

Further, in the HUD device 100, the condensing means comprises one or more focusing lenses. The surface of at least one of the focusing lenses is a toroidal surface or a free curved surface.

In this configuration, the focal distance of the condensing means can be easily made different in the longitudinal and lateral directions.

Further, the HUD device 100 is mounted on a vehicle (the vehicle C), the projection means is configured to include at last a windshield S of the vehicle.

Thus, even when the focal distance of the projection means is different in the longitudinal and lateral directions due to the windshield S, it is possible to keep the convergence of the display light L and suppress decreases in the light use efficiency and luminance uniformity of the virtual image V

Furthermore, the HUD device 100 described above, in a second viewpoint, is a head-up display device 100, which visually recognizes a virtual image V by projecting a display light L emitted from a display 3 provided with a backlight unit 1 and a liquid crystal display element 2 to a viewpoint area (eye box EB) of a viewer (a user U) via a projection means (a concave mirror 5 and a windshield S). The backlight unit 1 comprises a light source 10 for emitting light to illuminate a liquid crystal display element 2 (illumination light I), a lens array 40 in which a plurality of lenses 41 is arranged and which divides the light emitted from the light source 10 and forms multiple images of the light source 10, and a condensing means for condensing the light emitted from the image of the light source 10 to correspond to a display area A of the liquid crystal display element 2 (first and second focusing lenses 51 and 52). The lens array 40 is configured such that the light distribution angle $\theta2$ of the lens 41 in the periphery is different from the light distribution angle $\theta1$ of the lens 41 at the center.

In this configuration, even in the periphery of the lens array 40, regardless of the aberration of the first and second focusing lenses 51 and 52, it is possible to irradiate the illumination light I from the image of the light source 10 formed by the lens 41 to the entire display area A of the liquid crystal display element 2, and suppress uneven illumination in the display area A of the liquid crystal display element 2.

Further, the lens array 40 is configured such that the array pitch W2 of the lens 41 in the periphery is larger than the array pitch W1 of the lens 41 in at the central.

In this configuration, it is possible with ease to make the light distribution angle $\theta2$ of the lens 41 in the periphery different from the light distribution angle $\theta1$ of the lens 41 at the center.

Still further, the lens array 40 may be configured such that the focal distance of the lens 41 in the periphery is different from the focal distance of the lens 41 at the center.

In this configuration, it is possible with ease to make the light distribution angle $\theta2$ of the lens 41 in the periphery different from the light distribution angle $\theta1$ of the lens 41 at the center.

Further, the lens 41 is arranged in a rectangular shape in the lens array 40, so that the light distribution angle $\theta2$ of the lens 41 in the periphery is different from the light distribution angle $\theta1$ of the lens 41 at the center with respect to the length direction of the rectangular shape.

In this configuration, it possible to suppress uneven illumination in the display area A of the liquid crystal display element 2 in the region, which is separated away from the optical axis AX and more easily to occur uneven illumination. Even when the lens 41 is arranged in a rectangular shape in the lens array 40, if the whole size is large, the lens array may be configured such that the light distribution angle of the lens 41 in the periphery is different from the light distribution of the lens 41 at the center even in the shorter direction of the rectangular shape.

The present invention is not limited to the above embodiments, and may be modified in various forms.

Heretofore, a description has been given of an example that the condensing means comprises two focusing lenses. The condensing means may be configured with three or more focusing lenses. Further, the condensing means may include a concave mirror.

Further, as far as satisfying the illumination performance of the liquid crystal display element 2, in the backlight unit 1, optical components such as a reflector other than a lens and a reflection part 60 may be appropriately added or deleted.

It is also possible to configure the HUD device 100 without using both or one of the plane mirror 4 and the concave mirror 5.

Hereinbefore, a description has been given of an example that the user U visually recognizes a display image by reflecting the display light L on the windshield S of the vehicle C. The invention is not limited to this. The HUD device 100 may be provided with a dedicated combiner to visually recognize an image by reflecting the display light L by the combiner.

In the above description, an example of a vehicle to mount the HUD device 100 is the vehicle C, but a vehicle is not limited to this. The HUD device 100 may be mounted in other vehicles such as motorcycles, construction machinery, agricultural machinery, ships, airplanes, or the like.

The present invention is not limited by the above embodiments and the drawings. The embodiments and drawings may be appropriately modified within a scope of the appended claims.

## INDUSTRIAL APPLICABILITY

The present invention is suitable for a head-up display device.

## DESCRIPTION OF REFERENCE NUMERALS

| 100 | HUD device |
| 1 | Backlight unit |
| 10 | Light source |
| 20 | Parallel light generation means |
| 30 | Illumination uniformizing means |
| 40 | Lens array |
| 40A | Central portion |
| 40B | Left peripheral portion |
| 40C | Right peripheral portion |
| 41 | Lens |
| 51 | First focusing lens |
| 52 | Second focusing lens |
| 60 | Reflection part |
| 70 | Diffusion plate |
| 80 | Case body |
| 90 | Cover member |
| I | Illumination light |
| 2 | Liquid crystal display element |
| 3 | Display |
| 6 | Housing |
| 6a | Upper opening (Exit port) |
| L | Display light |
| V | Virtual image |
| U | User |

## Claims

1. A head-up display device (100), which projects a display light (L) emitted from a display (3) including a backlight unit (1) and a display to a viewpoint area of a viewer via a projection means, and visually recognizes an image represented by the display light (L), comprising:

   a light source (10) which emits light to illuminate the display element;
   a lens array (40) which divides light emitted from the light source (10), and generates a plurality of images of the light source (10), and
   a condensing means which condenses light emitted from an image of the light source (10) to correspond to a display area of the display element,
   wherein the condensing means is configured such that a focal distance is different in longitudinal and lateral directions to correct a different focal distance of the projection means in longitudinal and lateral directions,
   wherein the condensing means comprises one or more focusing lenses, and a front surface of at least one of the focusing lenses is toroidal or free curved, **characterised in that**:
   a plurality of lenses is arranged in the lens array (40), and the lens array (40) is configured such that a light distribution angle of a lens in a periphery is different from a light distribution angle of a lens at a center.

2. The head-up display device (100) according to claim 1, wherein both surfaces of at least one of the focusing lenses are toroidal.

3. The head-up display device (100) according to claim 1, which is mounted on a vehicle (C), and wherein the projection means is configured to include at least a windshield (S) of the vehicle (C).

4. The head-up display device (100) according to any preceding claim, wherein the lens array (40) is configured such that an array pitch of a lens in a periphery is larger than an array pitch of a lens at a center.

5. The head-up display device (100) according to any of claims 1 to 3, wherein the lens array (40) is configured such that a focal distance of a lens in a periphery is shorter than a focal distance of a lens at a center.

6. The head-up display device (100) according to any of claims 1 to 3, wherein
the lens is arranged in a rectangular shape in the lens array (40), and the lens array (40) is configured such that a light distribution angle of a lens in a periphery is different from a light distribution angle of a lens at a center with respect to a length direction of the rectangular shape.

**Patentansprüche**

1. Blickfeldanzeigevorrichtung (100), die ein Anzeigelicht (L), das von einer Anzeige (3) mit einer Hintergrundbeleuchtungseinheit (1) und einer Anzeige abgestrahlt wird, über ein Projektionsmittel auf einen Blickpunktbereich eines Betrachters projiziert und ein durch das Anzeigelicht (L) dargestelltes Bild visuell erkennt, umfassend:

eine Lichtquelle (10), die Licht abstrahlt, um das Anzeigeelement zu beleuchten;
eine Linsenanordnung (40), die das von der Lichtquelle (10) abgestrahlte Licht teilt und mehrere Bilder der Lichtquelle (10) erzeugt, und
ein Komprimierungsmittel, das von einem Bild der Lichtquelle (10) abgestrahltes Licht derart komprimiert, dass es einem Anzeigebereich des Anzeigeelements entspricht,
wobei das Komprimierungsmittel derart ausgelegt ist, dass eine Brennweite in Längs- und in Querrichtung unterschiedlich ist, um eine unterschiedliche Brennweite des Projektionsmittels in Längs- und in Querrichtung zu korrigieren,
wobei das Komprimierungsmittel eine oder mehrere Fokussierlinsen umfasst und eine vordere Fläche von wenigstens einer der Fokussierlinsen torisch oder frei gekrümmt ist, **dadurch gekennzeichnet, dass**:
mehrere Linsen in der Linsenanordnung (40) angeordnet sind und die Linsenanordnung (40) derart ausgelegt ist, dass ein Lichtverteilungswinkel einer Linse in einem Randbereich von einem Lichtverteilungswinkel einer Linse in einem Mittelbereich verschieden ist.

2. Blickfeldanzeigevorrichtung (100) gemäß Anspruch 1, wobei beide Flächen wenigstens einer der Fokussierlinsen torisch sind.

3. Blickfeldanzeigevorrichtung (100) gemäß Anspruch 1, die an einem Fahrzeug (C) angebracht ist, wobei das Projektionsmittel dafür ausgelegt ist, wenigstens eine Windschutzscheibe (S) des Fahrzeugs (C) einzuschließen.

4. Blickfeldanzeigevorrichtung (100) gemäß einem der vorstehenden Ansprüche, wobei die Linsenanordnung (40) derart ausgelegt ist, dass ein Anordnungsabstand einer Linse in einem Randbereich größer als ein Anordnungsabstand einer Linse in einem Mittelbereich ist.

5. Blickfeldanzeigevorrichtung (100) gemäß einem der Ansprüche 1 bis 3, wobei die Linsenanordnung (40) derart ausgelegt ist, dass eine Brennweite einer Linse in einem Randbereich kürzer als eine Brennweite einer Linse in einem Mittelbereich ist.

6. Blickfeldanzeigevorrichtung (100) gemäß einem der Ansprüche 1 bis 3, wobei
die Linse in rechteckiger Form in der Linsenanordnung (40) angeordnet ist und die Linsenanordnung (40) derart ausgelegt ist, dass bezogen auf eine Längsrichtung der rechteckigen Form ein Lichtverteilungswinkel einer Linse in einem Randbereich von einem Lichtverteilungswinkel einer Linse in einem Mittelbereich verschieden ist.

**Revendications**

1. Dispositif d'affichage tête haute (100), qui projette une lumière d'affichage (L) émise par un afficheur (3) contenant une unité de rétroéclairage (1) et un afficheur vers une zone de point de vue d'un observateur par l'intermédiaire d'un moyen de projection, et reconnaît visuellement une image représentée par la lumière d'affichage (L), comprenant :

   une source lumineuse (10) qui émet une lumière servant à éclairer l'élément d'affichage ;
   un réseau de lentilles (40) qui divise la lumière émise par la source lumineuse (10) et génère une pluralité d'images de la source lumineuse (10), et
   un moyen de condensation qui condense la lumière émise par une image de la source lumineuse (10) pour la faire correspondre à une zone d'affichage de l'élément d'affichage,
   dans lequel le moyen de condensation est configuré de telle façon qu'une distance focale soit différente dans les directions longitudinale et latérale, pour corriger une différence de distance focale du moyen de projection dans les directions longitudinale et latérale,
   dans lequel le moyen de condensation comprend une ou plusieurs lentilles de mise au point, et une surface avant d'au moins une des lentilles de mise au point est toroïdale ou en courbe de forme libre,
   **caractérisé en ce que**
   une pluralité de lentilles est disposée dans le réseau de lentilles (40), et le réseau de lentilles (40) est configuré de telle façon qu'un angle de distribution de lumière d'une lentille à une périphérie soit différent d'un angle de distribution de lumière d'une lentille au niveau d'un centre.

2. Dispositif d'affichage tête haute (100) selon la revendication 1, dans lequel les deux surfaces d'au moins une des lentilles de mise au point sont toroïdales.

3. Dispositif d'affichage tête haute (100) selon la revendication 1, qui est monté sur un véhicule (C), et dans lequel le moyen de projection est configuré pour contenir au moins un pare-brise (S) du véhicule (C).

4. Dispositif d'affichage tête haute (100) selon l'une quelconque des revendications précédentes, dans lequel le réseau de lentilles (40) est configuré de telle façon qu'un pas de réseau d'une lentille située à une périphérie soit supérieur à un pas de réseau d'une lentille située en un centre.

5. Dispositif d'affichage tête haute (100) selon l'une quelconque des revendications 1 à 3, dans lequel le réseau de lentilles (40) est configuré de telle façon qu'une distance focale d'une lentille située à une périphérie soit inférieure à une distance focale d'une lentille située en un centre.

6. Dispositif d'affichage tête haute (100) selon l'une quelconque des revendications 1 à 3, dans lequel
   la lentille est agencée avec une forme rectangulaire dans le réseau de lentilles (40), et le réseau de lentilles (40) est configuré de telle façon qu'un angle de distribution de lumière d'une lentille située à une périphérie soit supérieur à un angle de distribution de lumière d'une lentille située en un centre, par rapport à une direction de longueur de la forme rectangulaire.

FIG.1

FIG.2

FIG.3

FIG.4

FIG.5

(a) CROSS-SECTIONAL VIEW (EMBODIMENT, COMPARATIVE EXAMPLE)

(b) LONGITUDINAL SECTIONAL VIEW (COMPARATIVE EXAMPLE)

(c) LONGITUDINAL SECTIONAL VIEW (EMBODIMENT)

FIG.6

|←——— ARRAY PITCH LARGE 40B ———→|←——— ARRAY PITCH SMALL 40A ———→|←——— ARRAY PITCH LARGE 40C ———→|

40

41

FIG.7

(a)

Y

52

X          X

Y

(b)  Y-Y

52

(c)  X-X

52

FIG.8

LIGHT
SOURCE
SIDE

FIG.9

(a) CENTRAL PORTION 40A

40

41

W1

LIGHT
SOURCE
SIDE

*I*

*θ* 1

LIQUID CRYSTAL
DISPLAY ELEMENT
SIDE

(b) LEFT PERIPHERAL PORTION 40B, RIGHT PERIPHERAL PORTION 40C

40

41

W2

LIGHT
SOURCE
SIDE

*I*

*θ* 2

LIQUID CRYSTAL
DISPLAY ELEMENT
SIDE

FIG.10

(a) CENTRAL PORTION 40A

40

41

LIGHT
SOURCE
SIDE

$\theta 1$

LIQUID CRYSTAL
DISPLAY ELEMENT
SIDE

(b) LEFT PERIPHERAL PORTION 40B, RIGHT PERIPHERAL PORTION 40C

40

41

LIGHT
SOURCE
SIDE

$\theta 2$

LIQUID CRYSTAL
DISPLAY ELEMENT
SIDE

Equation 1

$$\frac{1}{f(a+b)} = \frac{1}{fa} + \frac{1}{fb} - \frac{d}{fa \times fb}$$

**EP 3 200 006 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2690484 A
- EP 0631167 A
- JP 2011085700 B
- US 2009296049 A
- JP 2012203176 A